# EUROPEAN PATENT SPECIFICATION

(11) **EP 3 073 374 B1**
(45) Date of publication and mention of the grant of the patent: **06.02.2019**
(21) Application number: 14873894.1
(22) Date of filing: 18.12.2014
(51) Int. Cl.: G06F 9/46, G06F 9/48, G06F 11/30, G06F 9/50

(54) **THREAD CREATION METHOD, SERVICE REQUEST PROCESSING METHOD AND RELATED DEVICE**
FADENERZEUGUNGSVERFAHREN, DIENSTANFORDERUNGVERARBEITUNGSVERFAHREN UND ZUGEHÖRIGE VORRICHTUNG
PROCÉDÉ DE CRÉATION DE FIL D'EXÉCUTION, PROCÉDÉ DE TRAITEMENT DE REQUÊTE DE SERVICE ET DISPOSITIF ASSOCIÉ

(30) Priority: 26.12.2013 CN 201310733930
(43) Date of publication of application: 28.09.2016
(73) Proprietor: Huawei Technologies Co., Ltd., Longgang District Shenzhen, Guangdong 518129 (CN)
(72) Inventor: SHEN, Qingni, Beijing 102600 (CN); LI, Cai, Beijing 102600 (CN); GUO, Mingyu, Beijing 102600 (CN); ZHANG, Tian, Beijing 102600 (CN); CHEN, Keping, Shenzhen Guangdong 518129 (CN); CAI, Yi, Shenzhen Guangdong 518129 (CN)
(74) Representative: Epping - Hermann - Fischer
(86) International application number: PCT/CN2014/094208
(87) International publication number: WO 2015/096656

(56) References cited:
- CN-A- 101 631 139
- CN-A- 102 497 322
- CN-A- 102 497 322
- CN-A- 102 769 575
- US-A1- 2006 047 532
- Anatole Shaw: "Multi-queue network interfaces with SMP on Linux | Greenhost", , 10 April 2013 (2013-04-10), pages 2-5, XP055308598, Greenhost Weblog Retrieved from the Internet: URL:https://greenhost.nl/2013/04/10/multi- queue-network-interfaces-with-smp-on-linux / [retrieved on 2016-10-07]
- Shinae Woo ET AL: "Scalable TCP Session Monitoring with Symmetric Receive-side Scaling", , 31 December 2012 (2012-12-31), XP055308885, KAIST, Daejeon, Korea Retrieved from the Internet: URL:http://www.ndsl.kaist.edu/~kyoungsoo/p apers/TR-symRSS.pdf [retrieved on 2016-10-10]
- Anonymus: "Linux/Documentation/networking/scaling.tx t - Linux Cross Reference", , 2 September 2013 (2013-09-02), pages 1-8, XP055312131, Retrieved from the Internet: URL:http://lxr.free-electrons.com/source/D ocumentation/networking/scaling.txt?v=3.11 [retrieved on 2016-10-19]
- Alex Sandler: "SMP affinity and proper interrupt handling in Linux", , 15 April 2008 (2008-04-15), XP055312288, Retrieved from the Internet: URL:http://www.alexonlinux.com/smp-affinit y-and-proper-interrupt-handling-in-linux [retrieved on 2016-10-19]
- Alexander Sandler: "Why interrupt affinity with multiple cores is not such a good thing", , 17 September 2009 (2009-09-17), XP055312295, Retrieved from the Internet: URL:http://www.alexonlinux.com/why-interru pt-affinity-with-multiple-cores-is-not-suc h-a-good-thing [retrieved on 2016-10-19]
- Anonymus: "Interrupt handler", , 10 September 2013 (2013-09-10), XP055312330, Retrieved from the Internet: URL:https://en.wikipedia.org/wiki/Interrup t_handler [retrieved on 2016-10-19]

## Description

### TECHNICAL FIELD

The present invention relates to the field of computer technologies, and in particular, to a thread creation method, a service request processing method, and a related device.

### BACKGROUND

With rapid development of the Internet, people access a Web server increasingly frequently, thus imposing an increasingly high requirement on performance of the Web server. To provide a quicker service for a user, the Web server has an increasingly high requirement for parallel processing of accesses. When a quantity of parallel accesses from users is excessively high, the server is overloaded, and a speed of accessing a website decreases. To accommodate more users for simultaneous access and enhance performance of the Web server as much as possible, it needs to improve a processing capacity of the Web server as much as possible, and use a more powerful computer chip.

In recent years, as a computer chip manufacturing technique continuously improves, a many-core processor has become an important trend in processor development. The many-core processor has a larger quantity of processor cores than a multi-core processor, and has a more powerful computing capability. A current software structure can be better expanded on a current multi-core structure; however, an expansion capability of the current software structure becomes extremely poor if there are more than eight processor cores. A design of more than eight processor cores is called a "many-core" processor.

The many-core processor has more processing units and a more powerful parallel processing capacity than an ordinary multi-core processor. Increasingly more Web servers are using this powerful many-core environment as a basis for enhancing performance of the Web servers. The current software structure has been well expanded on the ordinary multi-core processor.

However, in a many-core processor environment, how to ensure that software can be more efficiently expanded with an increase in a quantity of cores has gradually become a core problem in many-core software design.

On the other hand, a multi-kernel operating system based on the many-core processor also continuously develops. In the multi-kernel operating system, all cores (core) each have its own kernel (kernel) and do not share a memory, which is different from an existing Windows operating system and an existing Linux kernel-based operating system. Communication between kernels is performed in a message passing manner; if a quantity of kernels is extremely large, this manner is better than a conventional communication manner in which a memory is shared, and can make full use of a many-core processing chip. Currently, there are already some applications based on the multi-kernel operating system, for example, a Barrelfish-based Haskell compiler and a Barrelfish-based virtual machine. Performance of the applications in the many-core environment is significantly higher than that in a conventional operating system.

As the Web server has a significantly increased demand on processors, if an advantage of the multi-kernel operating system can be used, a processing capacity of the many-core environment can be used as fully as possible. Therefore, how to deploy software of the Web server in the multi-kernel operating system becomes a core problem.

In the operating systems such as Windows and Linux, for a process and thread model of the operating systems, current software of a Web server uses a specific manner to create and manage a process and a thread, so as to perform multi-task management and simultaneously respond to parallel requests. If the current multi-task management manner is directly applied to the many-kernel operating system, unnecessary system overheads are introduced, and therefore, an advantage of the many-core environment cannot be achieved.

To resolve the multi-task management problem, there are already some mature methods and models in the prior art. A typical multi-task management method is called Prefork (prefork). Prefork implements a non-threaded, pre-forking Web server.

In the Prefork method, a separate control process (a parent process) is responsible for generating child processes, where these child processes are used to listen to a request and make an answer.

In addition, the Web server always tries to keep some spare (spare) or idle child processes to prepare for processing an upcoming request, so that a client does not need to wait for generation of a child process before obtaining a service, improving efficiency of processing a request.

However, in the foregoing Prefork method, even though a process created in advance can process a new request to avoid that a response speed is affected due to that a client waits for a server to create a process, the following problems still exist:
Too many processes occupy too many unnecessary system resources, which wastes a space resource of a system, increases overheads of process scheduling by an operating system, and wastes a time resource of the system. In addition, because processing of a request is completed by using a process without using an advantage of a thread, costs are relatively high.

Another commonly used multi-task management method for a Web server is Worker, and the Worker method supports mixed multiples threads and multiple processes.

In the Worker method, an attempt is made to always maintain a spare (spare) or idle service thread pool. In this way, a request from a client can be processed without waiting for creation of a new thread or a new process. A particular quantity of processes are created during initialization; then, a parent process checks a total quantity of idle threads in all child processes, and creates or ends a child process to maintain the total quantity of idle threads in a particular range.

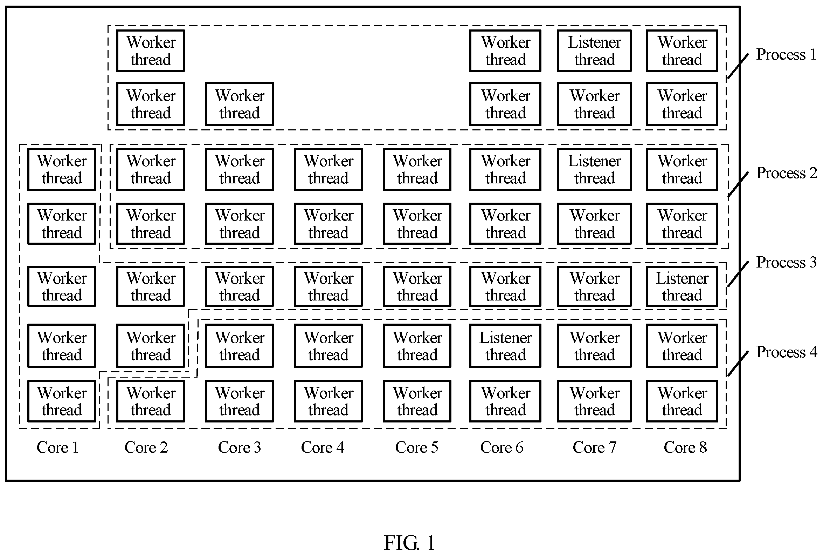

In addition, as shown in FIG. 1, multiple processes may be created, for example, a process 1 to a process 4; threads created in one process may include one listener thread (listener) and multiple worker threads (worker), and each thread is randomly scheduled to an idle core, such as a core 1 to core 8 shown in FIG. 1. After the multiple processes and the multiple threads are created, the multiple listener threads in the multiple processes request to compete for one lock from a system, and can perform listening only after the lock is obtained by means of requesting. Each listener thread allocates, to an idle worker thread, a service request obtained by means of listening, where the idle worker thread and the listener thread belong to a same process.

In the Worker method, because a thread is used to process a service request, massive requests can be processed, and system resource overheads are less than those of a process-based management method.

However, because multiple listener threads need to request or compete for one lock from a system, and an increase in a quantity of cores intensifies the competition, a processing capacity of a server cannot linearly increase with the increase in the quantity of cores. Further, improper creation of a process and a thread results in relatively low efficiency of parallel processing of multiple service requests by the server. Document "Multi-queue network interfaces with SMP on Linux | Greenhost", 10 April 2013 (2013-04-10), XP055308598, describes a receive-side scaling mechanism for distributing network processing load over multiple cores on a system with a multi-queue NIC by binding each queue to a different core and associating an IRQ with each NIC queue.

### SUMMARY

Embodiments of the present invention are defined by the claims. A thread creation method, a service request processing method, and a related device, to resolve a problem of improper creation of a thread and an incurred problem of relatively low efficiency of parallel processing of service requests by a server in the prior art are provided.

According to a first aspect, a thread creation method is provided, which is applied to a server that has a multi-queue network interface card, where a network interface card queue of the multi-queue network interface card stores a service request from a client, and the method includes:
acquiring a quantity of network interface card queues of the multi-queue network interface card of the server;
creating processes whose quantity is equal to the quantity of network interface card queues;
creating one listener thread and multiple worker threads in each process; and
binding each created listener thread to a different network interface card queue.

With reference to the first aspect, in a first possible implementation manner, the server has a multi-core processor; and
the binding each created listener thread to a different network interface card queue includes:
binding each created listener thread to a different target core in the multi-core processor, and binding each network interface card queue in the multi-queue network interface card to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores.

With reference to the first possible implementation manner of the first aspect, in a second possible implementation manner, the method further includes:
binding each worker thread created in each process to one core.

With reference to the second possible implementation manner of the first aspect, in a third possible implementation manner, worker threads created in different processes are bound to different cores.

With reference to the first possible implementation manner of the first aspect, the second possible implementation manner of the first aspect, or the third possible implementation manner of the first aspect, in a fourth possible implementation manner, the method further includes:
when a core is added to the multi-core processor of the server, for each added core, creating a new worker thread in one of the processes; and
binding the new created worker thread to the added core.

With reference to the first aspect, the first possible implementation manner of the first aspect, the second possible implementation manner of the first aspect, or the third possible implementation manner of the first aspect, in a fifth possible implementation manner, the method further includes:
when a network interface card queue is added to the multi-queue network interface card of the server, creating a new process for each added network interface card queue;
creating one listener thread and multiple worker threads in the new created process; and
binding the listener thread created in the new process to the added network interface card queue.

With reference to the first aspect, the first possible implementation manner of the first aspect, the second possible implementation manner of the first aspect, or the third possible implementation manner of the first aspect, in a sixth possible implementation manner, the method further includes:
creating a new worker thread in a process when a quantity of idle worker threads in worker threads created in the process is less than a first preset quantity threshold; and/or
deleting an idle worker thread from a process when a quantity of idle worker threads in worker threads created in the process is greater than a second preset quantity threshold, where after the deleting, the quantity of idle worker threads in the worker threads created in the process is not greater than the second preset quantity threshold.

According to a second aspect, a service request processing method is provided, which is applied to a multi-queue network interface card of a server, where a network interface card queue of the multi-queue network interface card stores a service request from a client; processes whose quantity is equal to a quantity of network interface card queues of the multi-queue network interface card are created on the server; one listener thread and multiple worker threads are created in each process; each created listener thread is bound to a different network interface card queue; and the method includes:
acquiring, by the multi-queue network interface card from the network interface card queue of the multi-queue network interface card, the service request from the client;
sending the service request to a listener thread bound to the network interface card queue;
receiving a service processing result that is sent by a worker thread after the worker thread performs service processing on the service request, where the worker thread and the listener thread belong to a same process; and
returning the service processing result to the client.

With reference to the second aspect, in a first possible implementation manner, before the acquiring, from the network interface card queue of the multi-queue network interface card, the service request from the client, the method further includes:
receiving a service request acquiring message sent by each created listener thread, where the service request acquiring message carries a queue identifier of a network interface card queue bound to the listener thread; and
determining that the listener thread that sends the service request acquiring message is bound to the network interface card queue corresponding to the queue identifier carried in the service request acquiring message.

With reference to the second aspect, in a second possible implementation manner, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the sending the service request to a listener thread bound to the network interface card queue includes:
sending the service request to the listener thread running in the target core bound to the network interface card queue.

With reference to the second possible implementation manner of the second aspect, in a third possible implementation manner, the worker thread created in each process is bound to a core.

With reference to the third possible implementation manner of the second aspect, in a fourth possible implementation manner, worker threads created in different processes are bound to different cores.

According to a third aspect, a service request processing method is provided, which is applied to a listener thread created on a server, where the server has a multi-queue network interface card; a network interface card queue of the multi-queue network interface card stores a service request from a client; processes whose quantity is equal to a quantity of network interface card queues of the multi-queue network interface card are created on the server; one listener thread and multiple worker threads are created in each process; each created listener thread is bound to a different network interface card queue; and the method includes:
receiving, by the listener thread, a service request sent by the multi-queue network interface card of the server, where the service request is acquired from a network interface card queue bound to the listener thread and is from the client; and
sending the service request to an idle worker thread, where the service request is used for instructing the worker thread to perform service processing on the service request and send an obtained service processing result to the multi-queue network interface card, where the worker thread and the listener thread belong to a same process.

With reference to the third aspect, in a first possible implementation manner, before the receiving a service request sent by the multi-queue network interface card of the server, where the service request is acquired from a network interface card queue bound to the listener thread and is from the client, the method further includes:
sending a service request acquiring message to the multi-queue network interface card, where the service request acquiring message carries a queue identifier of the network interface card queue bound to the listener thread, and the queue identifier is used by the multi-queue network interface card to determine that the listener thread is bound to the network interface card queue corresponding to the queue identifier.

With reference to the third aspect, in a second possible implementation manner, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the receiving, by the listener thread, a service request sent by the multi-queue network interface card of the server, where the service request is acquired from a network interface card queue bound to the listener thread and is from the client includes:
receiving, by the listener thread, the service request sent by the multi-queue network interface card of the server, where the service request is acquired from the network interface card queue bound to the target core running the listener thread and is from the client.

With reference to the second possible implementation manner of the third aspect, in a third possible implementation manner, the worker thread created in each process is bound to a core.

With reference to the third possible implementation manner of the third aspect, in a fourth possible implementation manner, worker threads created in different processes are bound to different cores.

With reference to the third aspect, the first possible implementation manner of the third aspect, the second possible implementation manner of the third aspect, the third possible implementation manner of the third aspect, or the fourth possible implementation manner of the third aspect, in a fifth possible implementation manner, the method further includes:
creating a new worker thread in the process to which the listener thread belongs when a quantity of idle worker threads in worker threads created in the process is less than a first preset quantity threshold; and/or
deleting an idle worker thread from the process to which the listener thread belongs when a quantity of idle worker threads in worker threads created in the process is greater than a second preset quantity threshold, where after the deleting, the quantity of idle worker threads in the worker threads created in the process is not greater than the second preset quantity threshold.

According to a fourth aspect, a thread creation apparatus is provided, which is applied to a server that has a multi-queue network interface card, where a network interface card queue of the multi-queue network interface card stores a service request from a client, and the apparatus includes:
a quantity acquiring unit, configured to acquire a quantity of network interface card queues of the multi-queue network interface card of the server;
a process creation unit, configured to create processes whose quantity is equal to the quantity of network interface card queues;
a thread creation unit, configured to create one listener thread and multiple worker threads in each process; and
a binding unit, configured to bind each created listener thread to a different network interface card queue.

With reference to the fourth aspect, in a first possible implementation manner, the server has a multi-core processor; and
the binding unit is specifically configured to: bind each created listener thread to a different target core in the multi-core processor, and bind each network interface card queue in the multi-queue network interface card to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores.

With reference to the first possible implementation manner of the fourth aspect, in a second possible implementation manner, the binding unit is further configured to bind each worker thread created in each process to one core.

With reference to the second possible implementation manner of the fourth aspect, in a third possible implementation manner, worker threads created in different processes are bound to different cores.

With reference to the first possible implementation manner of the fourth aspect, the second possible implementation manner of the fourth aspect, or the third possible implementation manner of the fourth aspect, in a fourth possible implementation manner, the thread creation unit is further configured to: when a core is added to the multi-core processor of the server, for each added core, create a new worker thread in one of the processes; and
the binding unit is further configured to bind the new created worker thread to the added core.

With reference to the fourth aspect, the first possible implementation manner of the fourth aspect, the second possible implementation manner of the fourth aspect, or the third possible implementation manner of the fourth aspect, in a fifth possible implementation manner, the process creation unit is further configured to: when a network interface card queue is added to the multi-queue network interface card of the server, create a new process for each added network interface card queue;
the thread creation unit is further configured to create a listener thread and a worker thread in the new created process; and
the binding unit is further configured to bind the listener thread created in the new process to the added network interface card queue.

With reference to the fourth aspect, the first possible implementation manner of the fourth aspect, the second possible implementation manner of the fourth aspect, or the third possible implementation manner of the fourth aspect, in a sixth possible implementation manner, the thread creation unit is further configured to: create a new worker thread in a process when a quantity of idle worker threads in worker threads created in the process is less than a first preset quantity threshold; and/or
delete an idle worker thread from a process when a quantity of idle worker threads in worker threads created in the process is greater than a second preset quantity threshold, where after the deleting, the quantity of idle worker threads in the worker threads created in the process is not greater than the second preset quantity threshold.

According to a fifth aspect, a service request processing apparatus is provided, which is applied to a multi-queue network interface card of a server, where a network interface card queue of the multi-queue network interface card stores a service request from a client; processes whose quantity is equal to a quantity of network interface card queues of the multi-queue network interface card are created on the server; one listener thread and multiple worker threads are created in each process; each created listener thread is bound to a different network interface card queue; and the apparatus includes:
a service request acquiring unit, configured to acquire, from the network interface card queue of the multi-queue network interface card, the service request from the client;
a first sending unit, configured to send the service request to a listener thread bound to the network interface card queue;
a receiving unit, configured to receive a service processing result that is sent by a worker thread after the worker thread performs service processing on the service request, where the worker thread and the listener thread belong to a same process; and
a second sending unit, configured to return the service processing result to the client.

With reference to the fifth aspect, in a first possible implementation manner, the receiving unit is further configured to: before the service request acquiring unit acquires, from the network interface card queue of the multi-queue network interface card, the service request from the client, receive a service request acquiring message sent by each created listener thread, where the service request acquiring message carries a queue identifier of a network interface card queue bound to the listener thread; and
the apparatus further includes:
a binding relationship determining unit, configured to determine that the listener thread that sends the service request acquiring message is bound to the network interface card queue corresponding to the queue identifier carried in the service request acquiring message.

With reference to the fifth aspect, in a second possible implementation manner, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the first sending unit is specifically configured to send the service request to the listener thread running in the target core bound to the network interface card queue.

With reference to the second possible implementation manner of the fifth aspect, in a third possible implementation manner, the worker thread created in each process is bound to a core.

With reference to the third possible implementation manner of the fifth aspect, in a fourth possible implementation manner, worker threads created in different processes are bound to different cores.

According to a sixth aspect, a service request processing apparatus is provided, which is applied to a listener thread created on a server, where the server has a multi-queue network interface card; a network interface card queue of the multi-queue network interface card stores a service request from a client; processes whose quantity is equal to a quantity of network interface card queues of the multi-queue network interface card are created on the server; one listener thread and multiple worker threads are created in each process; each created listener thread is bound to a different network interface card queue; and the apparatus includes:
a receiving unit, configured to receive a service request sent by the multi-queue network interface card of the server, where the service request is acquired from a network interface card queue bound to the listener thread and is from the client; and
a first sending unit, configured to send the service request to an idle worker thread, where the service request is used for instructing the worker thread to perform service processing on the service request and send an obtained service processing result to the multi-queue network interface card, where the worker thread and the listener thread belong to a same process.

With reference to the sixth aspect, in a first possible implementation manner, the apparatus further includes:
a second sending unit, configured to send a service request acquiring message to the multi-queue network interface card before the receiving unit receives the service request sent by the multi-queue network interface card of the server, where the service request is acquired from the network interface card queue bound to the listener thread and is from the client, the service request acquiring message carries a queue identifier of the network interface card queue bound to the listener thread, and the queue identifier is used by the multi-queue network interface card to determine that the listener thread is bound to the network interface card queue corresponding to the queue identifier.

With reference to the sixth aspect, in a second possible implementation manner, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the receiving unit is specifically configured to receive the service request sent by the multi-queue network interface card of the server, where the service request is acquired from the network interface card queue bound to the target core running the listener thread and is from the client.

With reference to the second possible implementation manner of the sixth aspect, in a third possible implementation manner, the worker thread created in each process is bound to a core. With reference to the third possible implementation manner of the sixth aspect, in a fourth possible implementation manner, worker threads created in different processes are bound to different cores.

With reference to the sixth aspect, the first possible implementation manner of the sixth aspect, the second possible implementation manner of the sixth aspect, the third possible implementation manner of the sixth aspect, or the fourth possible implementation manner of the sixth aspect, in a fifth possible implementation manner, the apparatus further includes:
a thread creation unit, configured to: create a new worker thread in the process to which the listener thread belongs when a quantity of idle worker threads in worker threads created in the process is less than a first preset quantity threshold; and/or
delete an idle worker thread from the process to which the listener thread belongs when a quantity of idle worker threads in worker threads created in the process is greater than a second preset quantity threshold, where after the deleting, the quantity of idle worker threads in the worker threads created in the process is not greater than the second preset quantity threshold. According to a seventh aspect, a server is provided, including:
a multi-queue network interface card, configured to: receive a service request from a client, and store the service request from the client in a network interface card queue of the multi-queue network interface card; and
a processor, configured to: acquire a quantity of network interface card queues of the multi-queue network interface card of the server, create processes whose quantity is equal to the quantity of network interface card queues, create one listener thread and multiple worker threads in each process, and bind each created listener thread to a different network interface card queue. With reference to the seventh aspect, in a first possible implementation manner, the processor is a multi-core processor; and
the processor is specifically configured to: bind each created listener thread to a different target core in the multi-core processor, and bind each network interface card queue in the multi-queue network interface card to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores.

With reference to the first possible implementation manner of the seventh aspect, in a second possible implementation manner, the processor is further configured to bind each worker thread created in each process to one core.

With reference to the second possible implementation manner of the seventh aspect, in a third possible implementation manner, worker threads created in different processes are bound to different cores.

With reference to the first possible implementation manner of the seventh aspect, the second possible implementation manner of the seventh aspect, or the third possible implementation manner of the seventh aspect, in a fourth possible implementation manner, the processor is further configured to: when a core is added to the multi-core processor of the server, for each added core, create a new worker thread in one of the processes, and bind the new created worker thread to the added core.

With reference to the seventh aspect, the first possible implementation manner of the seventh aspect, the second possible implementation manner of the seventh aspect, or the third possible implementation manner of the seventh aspect, in a fifth possible implementation manner, the processor is further configured to: when a network interface card queue is added to the multi-queue network interface card of the server, create a new process for each added network interface card queue, create one listener thread and multiple worker threads in the new created process, and bind the listener thread created in the new process to the added network interface card queue.

With reference to the seventh aspect, the first possible implementation manner of the seventh aspect, the second possible implementation manner of the seventh aspect, or the third possible implementation manner of the seventh aspect, in a sixth possible implementation manner, the processor is further configured to: create a new worker thread in a process when a quantity of idle worker threads in worker threads created in the process is less than a first preset quantity threshold; and/or
delete an idle worker thread from a process when a quantity of idle worker threads in worker threads created in the process is greater than a second preset quantity threshold, where after the deleting, the quantity of idle worker threads in the worker threads created in the process is not greater than the second preset quantity threshold.

According to an eighth aspect, a multi-queue network interface card of a server is provided, where processes whose quantity is equal to a quantity of network interface card queues of the multi-queue network interface card are created on the server; one listener thread and multiple worker threads are created in each process; each created listener thread is bound to a different network interface card queue; and the multi-queue network interface card includes:
an interface, configured to: receive a service request from a client, and store the service request in a network interface card queue;
a processing chip, configured to: acquire, from the network interface card queue of the multi-queue network interface card, the service request from the client; send the service request to a listener thread bound to the network interface card queue; receive a service processing result that is sent by a worker thread after the worker thread performs service processing on the service request, where the worker thread and the listener thread belong to a same process; and return the service processing result to the client; and
a memory, configured to store the service request that is from the client and is in the network interface card queue.

With reference to the eighth aspect, in a first possible implementation manner, the processing chip is further configured to: before acquiring, from the network interface card queue of the multi-queue network interface card, the service request from the client, receive a service request acquiring message sent by each created listener thread, where the service request acquiring message carries a queue identifier of a network interface card queue bound to the listener thread; and
determine that the listener thread that sends the service request acquiring message is bound to the network interface card queue corresponding to the queue identifier carried in the service request acquiring message.

With reference to the eighth aspect, in a second possible implementation manner, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the processing chip is specifically configured to send the service request to the listener thread running in the target core bound to the network interface card queue.

With reference to the second possible implementation manner of the eighth aspect, in a third possible implementation manner, the worker thread created in each process is bound to a core.

With reference to the third possible implementation manner of the eighth aspect, in a fourth possible implementation manner, worker threads created in different processes are bound to different cores.

Beneficial effects of the present invention include the following:
Solutions provided in the embodiments of the present invention are applied to a server that has a multi-queue network interface card, where a network interface card queue of the multi-queue network interface card stores a service request from a client; after the server is started, the server creates a process and a thread, creates processes whose quantity is equal to a quantity of network interface card queues, creates one listener thread and multiple worker threads in each process, and binds each created listener thread to a different network interface card queue. Therefore, when a service request is being processed, for a service request that is acquired from a network interface card queue and is from the client, the service request is sent to a listener thread bound to the network interface card queue, and the listener thread selects a worker thread to perform service processing on the service request, where the worker thread and the listener thread belong to a same process. In comparison with the prior art, lock competition occurred when multiple listener threads request to acquire a service request is avoided, and a service request in a network interface card queue can be directly sent to a bound listener thread, so that creation of a process and a thread is more proper, and efficiency of parallel processing of service requests by a server is improved.

Additional features and advantages of the application will be set forth in the specification that follows, and in part will be obvious from the specification, or be learned by practice of the application. Objectives and additional advantages of the application may be implemented and obtained by using structures specially specified in the written specification, claims, and accompanying drawings.

### BRIEF DESCRIPTION OF DRAWINGS

Accompanying drawings are used to provide further understanding of the present invention, constitute a part of the specification, and are used to explain the present invention together with embodiments of the present invention, which do not constitute a limitation to the present invention. In the accompanying drawings:
FIG. 1 is a schematic diagram of multiple processes and multiple threads that are created by using a Worker method in the prior art;
FIG. 2 is a flowchart 1 of a thread creation method according to Embodiment 1 of the present invention;
FIG. 3 is a flowchart 2 of a thread creation method according to Embodiment 1 of the present invention;
FIG. 4 is a schematic diagram of processes and threads that are created in Embodiment 1 of the present invention;
FIG. 5 is a schematic diagram of a process and a network interface card queue that are bound to each other according to Embodiment 1 of the present invention;
FIG. 6 is a processing flowchart of creating a new thread when a quantity of cores increases according to Embodiment 1 of the present invention;
FIG. 7 is a processing flowchart of creating a new process and a new thread when a quantity of network interface card queues of a multi-queue network interface card increases according to Embodiment 1 of the present invention;
FIG. 8 is a flowchart of a service request processing method applied to a multi-queue network interface card of a server according to Embodiment 2 of the present invention;
FIG. 9 is a flowchart of a service request processing method applied to a listener thread according to Embodiment 2 of the present invention;
FIG. 10 is a flowchart of a service request processing method according to Embodiment 2 of the present invention;
FIG. 11 is a schematic structural diagram of a thread creation apparatus according to Embodiment 3 of the present invention;
FIG. 12 is a schematic structural diagram of a service request processing apparatus according to Embodiment 4 of the present invention;
FIG. 13 is a schematic structural diagram of a service request processing apparatus according to Embodiment 5 of the present invention;
FIG. 14 is a schematic structural diagram of a server according to Embodiment 6 of the present invention; and
FIG. 15 is a schematic structural diagram of a multi-queue network interface card according to Embodiment 7 of the present invention.

### DESCRIPTION OF EMBODIMENTS

To provide an implementation solution that makes thread creation more proper, and improves efficiency of parallel processing of service requests by a server, embodiments of the present invention provide a thread creation method, a service request processing method, and a related device. The following describes exemplary embodiments of the present invention with reference to the accompanying drawings of this specification. It should be understood that the exemplary embodiments described herein are merely used to describe and explain the present invention, but are not intended to limit the present invention. The embodiments of the application and features in the embodiments may be mutually combined if they do not conflict with each other.

### Embodiment 1

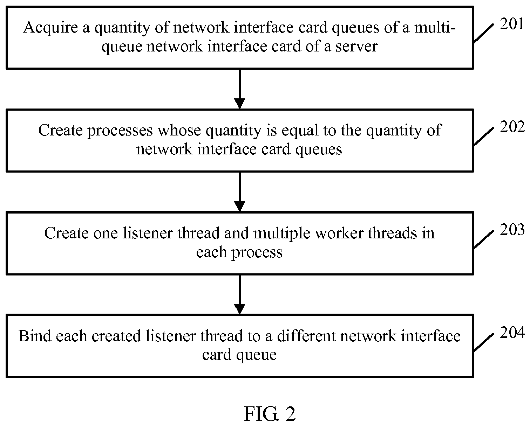

Embodiment 1 of the present invention provides a thread creation method, which is applied to a server that has a multi-queue network interface card, where a network interface card queue of the multi-queue network interface card stores a service request from a client. As shown in FIG. 2, the method includes:
Step 201. Acquire a quantity of network interface card queues of the multi-queue network interface card of the server.
Step 202. Create processes whose quantity is equal to the quantity of network interface card queues.
Step 203. Create one listener thread and multiple worker threads in each process.
Step 204. Bind each created listener thread to a different network interface card queue.

In the foregoing thread creation method, the quantity of created processes is equal to the quantity of network interface card queues, and the listener threads created in the processes are bound to the different network interface card queues. Therefore, a service request in each network interface card queue may be subsequently allocated to a listener thread bound to the network interface card queue, multiple listener threads are prevented from competing for one lock, and creation of a process and a thread is more proper.

Further, when the server has a multi-core processor, the following manner may be specifically used when each created listener thread is bound to the different network interface card queue:
Each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores.

Further, the worker thread created in each process may further be bound to a core, and worker threads created in different processes are bound to different cores. Therefore, in comparison with a solution in the prior art that each thread is randomly scheduled to an idle core, thread scheduling overheads are reduced, and even though a large number of threads are generated, performance of the server does not significantly degrade due to scheduling of the threads on cores.

In addition, before a listener thread and a worker thread are separately bound to a core, a quantity of cores of the multi-core processor of the server may further be acquired, and binding is performed based on the quantity of cores, so that after a worker thread created in each process is bound to a core, a difference in quantity of cores bound to listener threads and worker threads that are created in different processes is not greater than 1. Therefore, a processing capacity of each core is used to a maximum extent, and general performance of parallel processing of service requests by the server is enhanced.

Further, a new thread may further be created if the quantity of cores of the multi-core processor increases, and a new process may further be created if the quantity of network interface card queues of the multi-queue network interface card increases. In addition, according to a quantity of idle worker threads in a process, a new thread may further be created or an idle worker thread may further be deleted, so that there is a proper quantity of idle worker threads, and a system resource used by a system to maintain a working process is reduced while it is ensured that the service request from the client is processed in a timely manner.

In the following, the foregoing thread creation method provided in the present invention is described in detail by using specific embodiments with reference to the accompanying drawings.

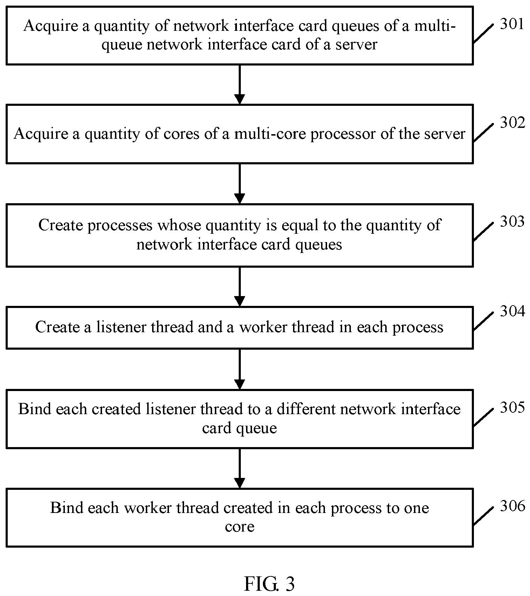

As shown in FIG. 3, the method specifically includes the following processing steps:
Step 301. After a server is started, acquire a quantity of network interface card queues of a multi-queue network interface card of the server.
Step 302. Further acquire a quantity of cores of a multi-core processor of the server.

There is no strict sequence between step 301 and step 302.

Step 303. Create processes whose quantity is equal to the quantity of network interface card queues.

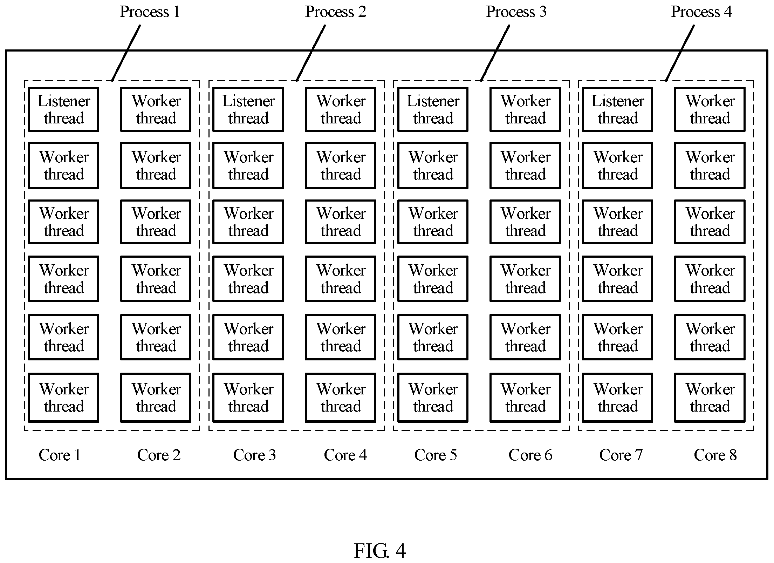

For example, as shown in FIG. 4, the quantity of network interface card queues of the multi-queue network interface card of the server is 4, and the processes whose quantity is equal to the quantity of network interface card queues are created according to a maximum concurrence principle, that is, a process 1 to a process 4 are created.

Step 304. Create a listener thread (listener) and a worker thread (worker) in each process.

In this step, as shown in FIG. 4, one listener thread and multiple worker threads may be created in each process, where a quantity of worker threads may be jointly determined according to an actual processing capacity of physical hardware of the server and an actual application scenario of the server, for example, an expected possible throughput, a quantity of parallel service requests, and a response time requirement.

An initial status of the created worker thread is idle, and after the worker thread subsequently receives a service request, the worker thread in a process of performing service processing on the service request is in a working state.

Step 305. Bind each created listener thread to a different network interface card queue.

When one listener thread is created in each process, a quantity of created listener threads is equal to the quantity of network interface card queues, and multiple listener threads and multiple network interface card queues in an equal quantity may be bound in a one-to-one correspondence.

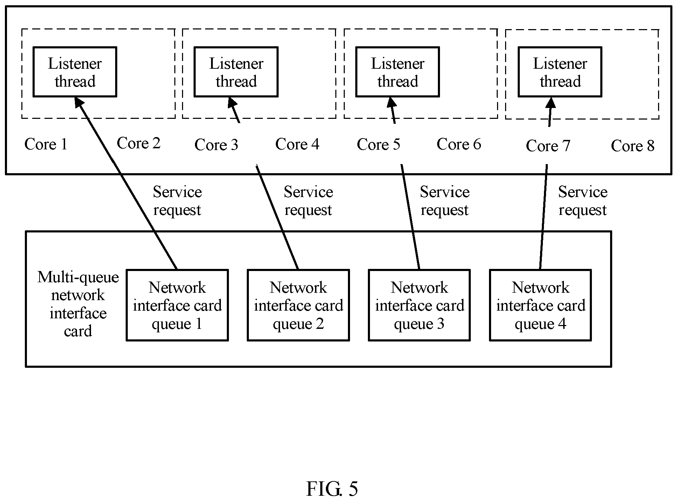

As shown in FIG. 5, a listener thread 1 to a listener thread 4 that are respectively created in the process 1 to the process 4 are respectively bound in a one-to-one correspondence to a network interface card queue 1 to a network interface card queue 4.

Specifically, when the server has a multi-core processor, multiple target cores whose quantity is equal to the quantity of network interface card queues are selected from cores of the multi-core processor, each created listener thread is bound to a different target core, and each network interface card queue in the multi-queue network interface card is bound to a different target core, so as to implement that each created listener thread is bound to a different network interface card queue.

Step 306. Further bind each worker thread created in each process to one core, and worker threads created in different processes are bound to different cores, so that the listener threads and the worker threads are always run by the cores respectively bound to the listener threads and the worker threads, which avoids system resource consumption caused by randomly scheduling the listener threads and the worker threads by multiple cores, and improves processing efficiency.

Further, to improve utilization of multiple cores and evenly allocate, to a maximum extent, a quantity of service requests processed by the multiple cores, a difference in quantity of cores bound to listener threads and worker threads that are created in different processes may further be not greater than 1 according to the quantity of cores of the multi-core processor.

As shown in FIG. 4, the quantity of cores of the multi-core processor of the server is 8, and a quantity of created processes is 4; then, cores used to bind to listener threads and worker threads may be allocated to each process, where cores corresponding to the process 1 are a core 1 and a core 2, cores corresponding to the process 2 are a core 3 and a core 4, cores corresponding to the process 3 are a core 5 and a core 6, and cores corresponding to the process 4 are a core 7 and a core 8.

A listener thread and some worker threads created in the process 1 are bound to the core 1, and other worker threads are bound to the core 2. A binding relationship between listener threads and worker threads that are created in the process 1 to the process 4 and cores is shown in FIG. 4.

In this embodiment of the present invention, port allocation of the multi-queue network interface card needs full support of physical hardware, an operating system, and an upper-layer application.

At a physical hardware layer, the multi-queue network interface card can parallel receive network packets from Ethernet. The operating system obtains the network packets by using a network interface card driver, packetizes and transfers the network packets to a module responsible for network delivery. In a conventional operating system, the process is generally completed by a kernel module; however, in a multi-kernel operating system, the process is mainly completed by a service running in a user mode. The service delivers the network packets to a listener thread that is running in a physical core. The listener thread parses business logic, and then performs corresponding forwarding processing according to a status.

Parallel-request processing is a core function of a multi-task management system. In this embodiment of the present invention, a thread is a minimum unit for processing multiple tasks.

Different from a general multi-task processing method, these worker threads are fixedly bound to corresponding cores, and do not need to be scheduled. In addition, each of the worker threads may be stored in a working queue or an idle queue according to a current status, such as a working state or an idle state. After initial deployment is completed, all the worker threads are in the idle queue. After receiving a service request, a listener thread that is in a process and is responsible for listening to a service request triggers event processing. In this case, an idle worker thread is taken from the idle queue, and the listener thread delivers the service request that is from the client to the worker thread for processing. In this case, the worker thread is sent to the working queue to process the task. After the processing is completed, the worker thread automatically retreats from the working queue, enters the idle queue, and returns to the idle state.

A status change may be completed by triggering different events.

According to the foregoing thread creation method shown in FIG. 3, multiple created listener threads whose quantity is equal to a quantity of network interface card queues are respectively bound in a one-to-one correspondence to network interface card queues, where the listener thread is used to subsequently receive a service request that is from a client and is in a bound network interface card queue, and deliver the service request to a worker thread for service processing, where the worker thread is idle and belongs to a same process with the listener thread, so that creation of a process and a thread is more proper, and efficiency of processing parallel service requests by a server is improved.

In addition, each created listener thread and worker thread may further be bound to a core, and be always run by the bound core, which avoids system resource consumption caused by randomly scheduling the listener threads and the worker threads by multiple cores, and improves processing efficiency.

In actual application in which a service request is processed by using the server, a processing capacity of the server may further be expanded according to an actual requirement. For example, the quantity of cores may be increased when a computing capability of the server needs to be enhanced; the quantity of network interface card queues of the multi-queue network interface card may be increased when a network throughput needs to be increased.

In Embodiment 1 of the present invention, for expansion of the processing capacity of the server, the following corresponding processing solutions are further proposed for creation of a process and a thread:

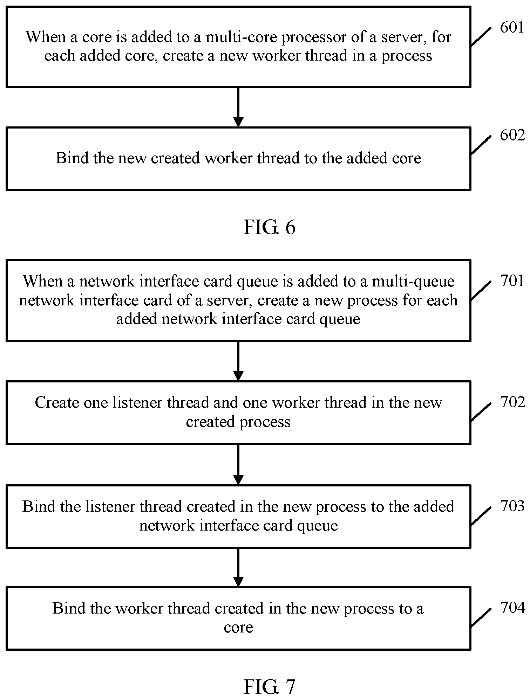

FIG. 6 shows a processing procedure for creating a new thread when a quantity of cores increases, which specifically includes:
Step 601. When a core is added to the multi-core processor of the server, for each added core, create a new worker thread in one of the processes.
Step 602. Bind the new created worker thread to the added core.

FIG. 7 shows a processing procedure for creating a new process and a new thread when a quantity of network interface card queues of a multi-queue network interface card increases, which specifically includes:
Step 701. When a network interface card queue is added to the multi-queue network interface card of the server, create a new process for each added network interface card queue.
Step 702. Create one listener thread and multiple worker threads in the new created process.
Step 703. Bind the listener thread created in the new process to the added network interface card queue.

Specifically, a core is selected as a new target core from another core except the target cores in the multi-core processor, the listener thread created in the new process is bound to the new target core, and the added network interface card queue is bound to the new target core, so as to implement that the listener thread created in the new process is bound to the added network interface card queue.

Step 704. Further bind the worker thread created in the new process to a core. In this case, if there is an added core, bind the worker thread to the added core; if there is no added core, unbind an original core and a worker thread, and bind the original core to the worker thread created in the new process.

In this embodiment of the present invention, after a server is started and a process and a thread are created by using the foregoing method shown in FIG. 3, the server can perform service processing on a service request from a client. During the processing, a status of a worker thread switches between a working state and an idle state, and a quantity of currently idle worker threads can indicate a current load status of the server, and a capability of processing future parallel service requests.

To better use a hardware resource, the server may have a particular dynamic expansion capability.

On the one hand, when service request load is excessively high, if a current quantity of worker threads cannot meet a parallel service quantity, the quantity of worker threads needs to be increased, so as to make full use of a computing capability of hardware. On the other hand, if the server has an excessively small quantity of service request services within a period of time but always maintains a large quantity of worker threads, a hardware resource such as consumed energy is wasted.

To ensure timely processing of future parallel service requests, worker threads in a process may be adjusted in the following first manner:
First manner: For each process, a magnitude relationship between a first preset quantity threshold and a quantity of idle worker threads in worker threads created in the process is monitored, and a new worker thread is created in the process when the quantity of idle worker threads in the worker threads created in the process is less than the first preset quantity threshold, so as to prepare for timely processing of future parallel service requests.

Further, the new created worker thread may further be bound to a core, where the core is a core corresponding to the process to which the new worker thread belongs.

On the other hand, a system resource needs to be consumed to maintain a created worker thread; therefore, to reduce system resource consumption, worker threads in a process may further be adjusted by using the following second manner:
Second manner: For each process, a magnitude relationship between a second preset quantity threshold and a quantity of idle worker threads in worker threads created in the process is monitored, and an idle worker thread in the process is deleted when the quantity of idle worker threads in the worker threads created in the process is greater than the second preset quantity threshold, where after the deleting, the quantity of idle worker threads in the worker threads created in the process is not greater than the second preset quantity threshold.

Further, when the foregoing two manners are combined, after the deleting in the second manner, the quantity of idle worker threads is not less than the first preset quantity threshold, where the first preset quantity threshold is less than the second preset quantity threshold, and a specific value may be flexibly set according to an actual application scenario and a requirement, which is not described in detail herein.

Combination of the foregoing two manners can further effectively reduce system resource consumption for maintaining created worker threads, and at the same time timely processing of future parallel service requests is ensured.

### Embodiment 2

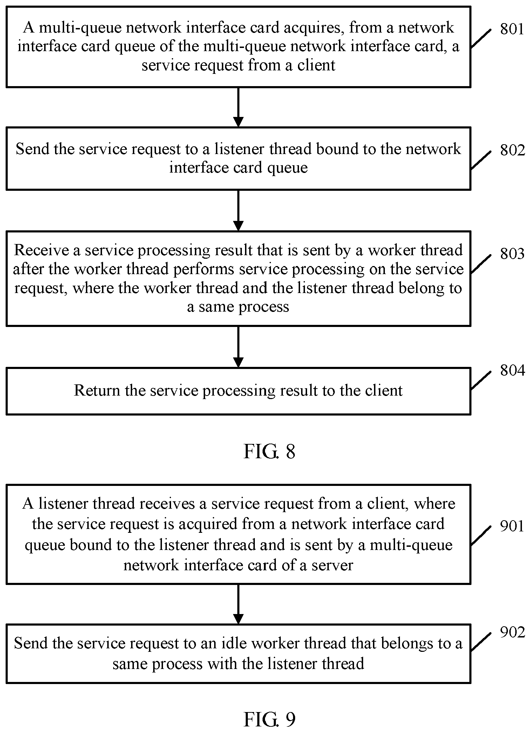

For the foregoing thread creation method provided in Embodiment 1 of the present invention, correspondingly, Embodiment 2 of the present invention provides a service request processing method, which is applied to a multi-queue network interface card of a server, where a network interface card queue of the multi-queue network interface card stores a service request from a client. As shown in FIG. 8, the method includes:
Step 801. The multi-queue network interface card acquires, from the network interface card queue of the multi-queue network interface card, the service request from the client.
Step 802. Send the service request to a listener thread bound to the network interface card queue.
Step 803. Receive a service processing result that is sent by a worker thread after the worker thread performs service processing on the service request, where the worker thread and the listener thread belong to a same process.
Step 804. Return the service processing result to the client.

Correspondingly, Embodiment 2 of the present invention further provides a service request processing method, which is applied to a listener thread. As shown in FIG. 9, the method includes:
Step 901. The listener thread receives a service request from a client, where the service request is acquired from a network interface card queue bound to the listener thread and is sent by a multi-queue network interface card of a server.
Step 902. Send the service request to an idle worker thread, where the service request is used for instructing the worker thread to perform service processing on the service request and send an obtained service processing result to the multi-queue network interface card, where the worker thread and the listener thread belong to a same process.

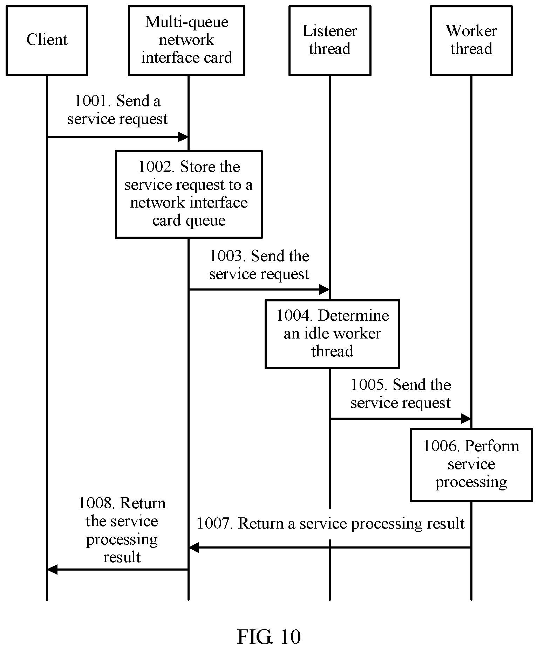

In the following, the foregoing service request processing methods provided in the present invention are described in detail by using specific embodiments with reference to the accompanying drawings. As shown in FIG. 10, the method specifically includes the following processing steps:
Step 1001: A client sends a service request to a server.

The service request processing methods provided in this embodiment of the present invention may be applied to various specific service scenarios; for example, the server may be a Web server, and the service request sent by the client is a Web request.

Step 1002. After receiving, by using a multi-queue network interface card, the service request sent by the client, the server stores the service request in a network interface card queue, and the service request waits to be delivered to a worker thread for service processing.

Step 1003. The multi-queue network interface card acquires the service request from the network interface card queue, and sends the service request to a listener thread bound to the network interface card queue.

In Embodiment 2 of the present invention, a binding relationship that is between a network interface card queue and a listener thread and is stored in the multi-queue network interface card side may be pre-configured in the multi-queue network interface card side after a process and a thread are created; or each created listener thread may send a service request acquiring message to the multi-queue network interface card, where the service request acquiring message carries a queue identifier of a network interface card queue bound to the listener thread, and the multi-queue network interface card determines, based on each received service request acquiring message, that the listener thread that sends the service request acquiring message is bound to the network interface card queue corresponding to the queue identifier carried in the service request acquiring message.

In this step, when binding of the network interface card queue and the listener thread is implemented by using a target core separately bound to the network interface card queue and the listener thread, the service request may be specifically sent to the listener thread running in the target core bound to the network interface card queue.

Step 1004. After receiving the service request sent by the multi-queue network interface card of the server, the listener thread determines, as a worker thread that subsequently processes the service request, an idle worker thread that belongs to a same process with the listener thread.

In this step, the listener thread may select a worker thread from all currently idle worker threads that belong to the same process with the listener thread. When there is no idle worker thread, a new worker thread may be created, and after creation is completed, the new worker thread is used as the worker thread that subsequently processes the service request.

After the new worker thread is created, the new worker thread may further be bound to a core, where the core is a core corresponding to the process to which the new worker thread belongs.

Step 1005. The listener thread sends the service request to the determined worker thread.

Step 1006. After receiving the service request, the worker thread performs service processing on the service request, to obtain a service processing result.

A specific processing manner may be determined based on different service application scenarios.

For example, when the service request is a Web request, a URL address carried in the Web request may be parsed, and service processing is performed by means of a processing operation such as reading a file from a disk, which is not described in detail herein.

When the worker thread has been bound to a core, the worker thread is run by the bound core, and performs service processing on the service request, which avoids random scheduling of the worker thread among multiple cores, reduces a system resource consumed for scheduling the worker thread, and improves processing efficiency.

Step 1007. The worker thread returns, to the multi-queue network interface card, the service processing result obtained after processing the service request.

Step 1008. The multi-queue network interface card returns the obtained service processing result to the corresponding client, to complete a response made to the service request from the client.

According to the foregoing service request processing methods provided in Embodiment 2 of the present invention, for a service request from a client that is acquired from a network interface card queue, the service request may be sent to a listener thread bound to the network interface card queue, and the listener thread selects a worker thread belonging to a same process with the listener thread to perform service processing on the service request. In comparison with the prior art, a lock competition occurred when multiple listener threads request to acquire a service request is avoided, and a service request in a network interface card queue can be directly sent to a bound listener thread, so that efficiency of processing parallel service requests by a server is improved.

In addition, each worker thread may be run by a bound core, which avoids scheduling of the worker threads by multiple cores, reduces system resource consumption, and further improves efficiency of processing parallel service requests.

### Embodiment 3

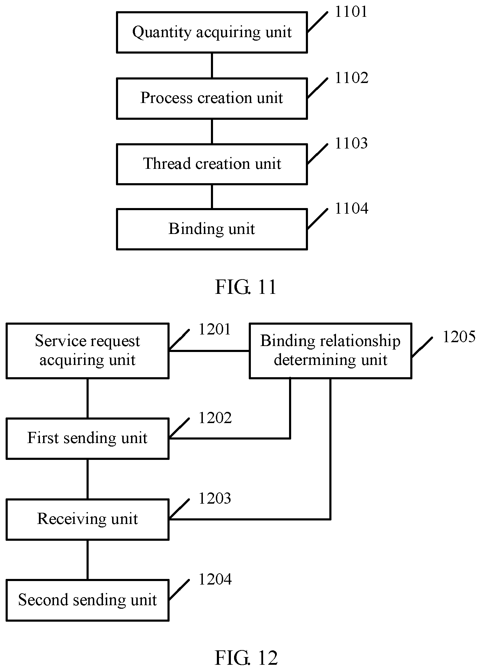

Based on a same invention idea and according to the thread creation method provided in the foregoing embodiment of the present invention, correspondingly, Embodiment 3 of the present invention further provides a thread creation apparatus, which is applied to a server that has a multi-queue network interface card, where a network interface card queue of the multi-queue network interface card stores a service request from a client. A schematic structural diagram of the apparatus is shown in FIG. 11, and the apparatus specifically includes:
a quantity acquiring unit 1101, configured to acquire a quantity of network interface card queues of the multi-queue network interface card of the server;
a process creation unit 1102, configured to create processes whose quantity is equal to the quantity of network interface card queues;
a thread creation unit 1103, configured to create one listener thread and multiple worker threads in each process; and
a binding unit 1104, configured to bind each created listener thread to a different network interface card queue.

Further, the server has a multi-core processor; and
the binding unit 1104 is specifically configured to: bind each created listener thread to a different target core in the multi-core processor, and bind each network interface card queue in the multi-queue network interface card to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores.

Further, the binding unit 1104 is further configured to bind each worker thread created in each process to one core.

Further, worker threads created in different processes are bound to different cores.

Further, the thread creation unit 1103 is further configured to: when a core is added to the multi-core processor of the server, for each added core, create a new worker thread in one of the processes; and
the binding unit 1104 is further configured to bind the new created worker thread to the added core.

Further, the process creation unit 1102 is further configured to: when a network interface card queue is added to the multi-queue network interface card of the server, create a new process for each added network interface card queue;
the thread creation unit 1103 is further configured to create a listener thread and a worker thread in the new created process; and
the binding unit 1104 is further configured to bind the listener thread created in the new process to the added network interface card queue.

Further, the thread creation unit 1103 is further configured to: create a new worker thread in a process when a quantity of idle worker threads in worker threads created in the process is less than a first preset quantity threshold; and/or
delete an idle worker thread from a process when a quantity of idle worker threads in worker threads created in the process is greater than a second preset quantity threshold, where after the deleting, the quantity of idle worker threads in the worker threads created in the process is not greater than the second preset quantity threshold.

Functions of units in the foregoing thread creation apparatus may be corresponding to processing steps in procedures shown in FIG. 2, FIG. 3, FIG. 6, and FIG. 7, and details are not described herein again.

### Embodiment 4

Based on a same invention idea and according to the service request processing method applied to a multi-queue network interface card provided in the foregoing embodiment of the present invention, correspondingly, Embodiment 4 of the present invention further provides a service request processing apparatus, which is applied to a multi-queue network interface card of a server, where a network interface card queue of the multi-queue network interface card stores a service request from a client, processes whose quantity is equal to a quantity of network interface card queues of the multi-queue network interface card are created on the server, one listener thread and multiple worker threads are created in each process, and each created listener thread is bound to a different network interface card queue. A schematic structural diagram of the apparatus is shown in FIG. 12, and the apparatus specifically includes:
a service request acquiring unit 1201, configured to acquire, from the network interface card queue of the multi-queue network interface card, the service request from the client;
a first sending unit 1202, configured to send the service request to a listener thread bound to the network interface card queue;
a receiving unit 1203, configured to receive a service processing result that is sent by a worker thread after the worker thread performs service processing on the service request, where the worker thread and the listener thread belong to a same process; and
a second sending unit 1204, configured to return the service processing result to the client.

Further, the receiving unit 1203 is further configured to: before the service request acquiring unit 1201 acquires, from the network interface card queue of the multi-queue network interface card, the service request from the client, receive a service request acquiring message sent by each created listener thread, where the service request acquiring message carries a queue identifier of a network interface card queue bound to the listener thread.

The apparatus further includes:
a binding relationship determining unit 1205, configured to determine that the listener thread that sends the service request acquiring message is bound to the network interface card queue corresponding to the queue identifier carried in the service request acquiring message. Further, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the first sending unit 1202 is specifically configured to send the service request to the listener thread running in the target core bound to the network interface card queue.

Further, the worker thread created in each process is bound to a core.

Further, worker threads created in different processes are bound to different cores.

Functions of units in the foregoing service request processing apparatus shown in FIG. 12 may be corresponding to processing steps in procedures shown in FIG. 8, FIG. 9, and FIG. 10, and details are not described herein again.

### Embodiment 5

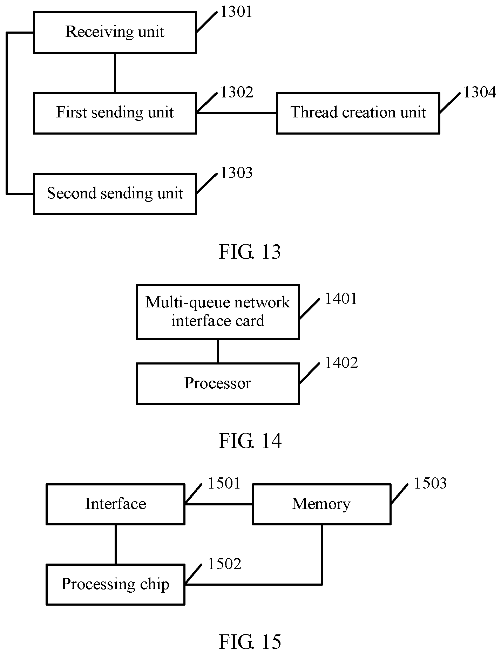

Based on a same invention idea and according to the service request processing method applied to a listener thread provided in the foregoing embodiment of the present invention, correspondingly, Embodiment 5 of the present invention further provides a service request processing apparatus, which is applied to a listener thread created on a server, where the server has a multi-queue network interface card, a network interface card queue of the multi-queue network interface card stores a service request from a client, processes whose quantity is equal to a quantity of network interface card queues of the multi-queue network interface card are created on the server, one listener thread and multiple worker threads are created in each process, and each created listener thread is bound to a different network interface card queue. A schematic structural diagram of the apparatus is shown in FIG. 13, and the apparatus specifically includes:
a receiving unit 1301, configured to receive a service request sent by the multi-queue network interface card of the server, where the service request is acquired from a network interface card queue bound to the listener thread and is from the client; and
a first sending unit 1302, configured to send the service request to an idle worker thread, where the service request is used for instructing the worker thread to perform service processing on the service request and send an obtained service processing result to the multi-queue network interface card, where the worker thread and the listener thread belong to a same process.

Further, the apparatus further includes:
a second sending unit 1303, configured to send a service request acquiring message to the multi-queue network interface card before the receiving unit 1301 receives the service request sent by the multi-queue network interface card of the server, where the service request is acquired from the network interface card queue bound to the listener thread and is from the client, the service request acquiring message carries a queue identifier of the network interface card queue bound to the listener thread, and the queue identifier is used by the multi-queue network interface card to determine that the listener thread is bound to the network interface card queue corresponding to the queue identifier.

Further, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the receiving unit 1301 is specifically configured to receive the service request sent by the multi-queue network interface card of the server, where the service request is acquired from the network interface card queue bound to the target core running the listener thread and is from the client.

Further, the worker thread created in each process is bound to a core.

Further, worker threads created in different processes are bound to different cores.

Further, the apparatus further includes:
a thread creation unit 1304, configured to: create a new worker thread in the process to which the listener thread belongs when a quantity of idle worker threads in worker threads created in the process is less than a first preset quantity threshold; and/or
delete an idle worker thread from the process to which the listener thread belongs when a quantity of idle worker threads in worker threads created in the process is greater than a second preset quantity threshold, where after the deleting, the quantity of idle worker threads in the worker threads created in the process is not greater than the second preset quantity threshold. Functions of units in the foregoing service request processing apparatus shown in FIG. 13 may be corresponding to processing steps in procedures shown in FIG. 8, FIG. 9, and FIG. 10, and details are not described herein again.

### Embodiment 6

Based on a same invention idea and according to the thread creation method provided in the foregoing embodiment of the present invention, correspondingly, Embodiment 6 of the present invention further provides a server. A schematic structural diagram of the server is shown in FIG. 14, and the server specifically includes:
a multi-queue network interface card 1401, configured to: receive a service request from a client, and store the service request from the client in a network interface card queue of the multi-queue network interface card; and
a processor 1402, configured to: acquire a quantity of network interface card queues of the multi-queue network interface card of the server, create processes whose quantity is equal to the quantity of network interface card queues, create one listener thread and multiple worker threads in each process, and bind each created listener thread to a different network interface card queue.

Further, the processor is a multi-core processor; and
the processor 1402 is specifically configured to: bind each created listener thread to a different target core in the multi-core processor, and bind each network interface card queue in the multi-queue network interface card to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores.

Further, the processor 1402 is further configured to bind each worker thread created in each process to one core.

Further, worker threads created in different processes are bound to different cores.

Further, the processor 1402 is further configured to: when a core is added to the multi-core processor of the server, for each added core, create a new worker thread in one of the processes, and bind each created new worker thread to the added core.

Further, the processor 1402 is further configured to: when a network interface card queue is added to the multi-queue network interface card of the server, create a new process for each added network interface card queue, create one listener thread and multiple worker threads in the new created process, and bind the listener thread created in the new process to the added network interface card queue.

Further, the processor 1402 is further configured to: create a new worker thread in a process when a quantity of idle worker threads in worker threads created in the process is less than a first preset quantity threshold; and/or
delete an idle worker thread from a process when a quantity of idle worker threads in worker threads created in the process is greater than a second preset quantity threshold, where after the deleting, the quantity of idle worker threads in the worker threads created in the process is not greater than the second preset quantity threshold.

### Embodiment 7

Based on a same invention idea and according to the service request processing method applied to a multi-queue network interface card provided in the foregoing embodiment of the present invention, correspondingly, Embodiment 7 of the present invention further provides a multi-queue network interface card of a server, where processes whose quantity is equal to a quantity of network interface card queues of the multi-queue network interface card are created on the server, one listener thread and multiple worker threads are created in each process, and each created listener thread is bound to a different network interface card queue. A schematic structural diagram of the multi-queue network interface card is shown in FIG. 15, and the multi-queue network interface card specifically includes:
an interface 1501, configured to: receive a service request from a client, and store the service request in a network interface card queue;
a processing chip 1502, configured to: acquire, from the network interface card queue of the multi-queue network interface card, the service request from the client; send the service request to a listener thread bound to the network interface card queue; receive a service processing result that is sent by a worker thread after the worker thread performs service processing on the service request, where the worker thread and the listener thread belong to a same process; and return the service processing result to the client; and
a memory 1503, configured to store the service request that is from the client and is in the network interface card queue.

Further, the processing chip 1502 is further configured to: before acquiring, from the network interface card queue of the multi-queue network interface card, the service request from the client, receive a service request acquiring message sent by each created listener thread, where the service request acquiring message carries a queue identifier of a network interface card queue bound to the listener thread; and
determine that the listener thread that sends the service request acquiring message is bound to the network interface card queue corresponding to the queue identifier carried in the service request acquiring message.

Further, the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, where the target cores are all cores in the multi-core processor that are used to bind the listener threads and the network interface card queues, and the quantity of network interface card queues is equal to a quantity of target cores; and
the processing chip 1502 is specifically configured to send the service request to the listener thread running in the target core bound to the network interface card queue.

Further, the worker thread created in each process is bound to a core.

Further, worker threads created in different processes are bound to different cores.

In conclusion, solutions provided in embodiments of the present invention include: acquiring a quantity of network interface card queues of a multi-queue network interface card of a server; creating processes whose quantity is equal to the quantity of network interface card queues; creating one listener thread and multiple worker threads in each process; and binding each created listener thread to a different network interface card queue. The solutions provided in the embodiments of the present invention are used to make creation of a process and a thread more proper, and improve efficiency of processing parallel service requests by a server.

In addition, by using a characteristic that a listener thread is bound to a system hardware computing unit (a core) by using a multi-queue network interface card, listener threads that need to listen to a service request are sequentially deployed on corresponding cores, which can fulfill an objective of simultaneously listening to multiple service requests from a network client. A network interface card driver parallel forwards the service requests to the listener threads, which improves a performance problem caused by serial forwarding of service requests in a conventional server system. Moreover, at a same moment, more worker threads can perform service processing on service requests.

In addition, the solutions provided in the embodiments of the present invention have scalability (Scalability). The scalability mentioned here means that when a hardware resource is updated, and a computing capability of a processor and a network processing capacity are improved, if a new core and a new network interface card queue are added, performance of an entire system can be effectively improved by correspondingly creating a new process and/or thread.

According to the solutions provided in the embodiments of the present invention, process and thread deployment is performed for a model of a server by using an advantage of linear scalability of a multi-kernel operating system. When a quantity of computing units is relatively large, this new structure still can effectively enhance performance of the server if a hardware resource is continuously added.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the exemplary embodiments and all changes and modifications falling within the scope of the present invention.

Obviously, persons skilled in the art can make various modifications and variations to the present invention without departing from the scope of the present invention.

## Claims

1. A service request processing method, applied to a listener thread created on a server, wherein the server has a multi-queue network interface card; a network interface card queue of the multi-queue network interface card stores a service request from a client; processes whose quantity is equal to a quantity of network interface card queues of the multi-queue network interface card are created on the server; one listener thread and multiple worker threads are created in each process; each created listener thread is bound to a different network interface card queue; and the method comprises:
receiving, by the listener thread, a service request sent by the multi-queue network interface card of the server, wherein the service request is acquired from a network interface card queue bound to the listener thread and is from the client; and
sending the service request to an idle worker thread, wherein the service request is used for instructing the worker thread to perform service processing on the service request and send an obtained service processing result to the multi-queue network interface card, wherein the worker thread and the listener thread belong to a same process.

2. The method according to claim 1, before the receiving a service request sent by the multi-queue network interface card of the server, wherein the service request is acquired from a network interface card queue bound to the listener thread and is from the client, further comprising:
sending a service request acquiring message to the multi-queue network interface card, wherein the service request acquiring message carries a queue identifier of the network interface card queue bound to the listener thread, and the queue identifier is used by the multi-queue network interface card to determine that the listener thread is bound to the network interface card queue corresponding to the queue identifier.

3. The method according to claim 1, wherein the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, wherein the target cores are all cores in the multi-core processor that are used to bind the listener threads and the network interface card queues, and the quantity of network interface card queues is equal to a quantity of target cores; and
the receiving, by the listener thread, a service request sent by the multi-queue network interface card of the server, wherein the service request is acquired from a network interface card queue bound to the listener thread and is from the client comprises:
receiving, by the listener thread, the service request sent by the multi-queue network interface card of the server, wherein the service request is acquired from the network interface card queue bound to the target core running the listener thread and is from the client.

4. The method according to claim 3, wherein the worker thread created in each process is bound to a core, wherein worker threads created in different processes are bound to different cores.

5. The method according to any one of claims 1 to 4, further comprising:
creating a new worker thread in the process to which the listener thread belongs when a quantity of idle worker threads in worker threads created in the process is less than a first preset quantity threshold; and/or
deleting an idle worker thread from the process to which the listener thread belongs when a quantity of idle worker threads in worker threads created in the process is greater than a second preset quantity threshold, wherein after the deleting, the quantity of idle worker threads in the worker threads created in the process is not greater than the second preset quantity threshold.

6. A service request processing apparatus, applied to a listener thread created on a server, wherein the server has a multi-queue network interface card; a network interface card queue of the multi-queue network interface card stores a service request from a client; processes whose quantity is equal to a quantity of network interface card queues of the multi-queue network interface card are created on the server; one listener thread and multiple worker threads are created in each process; each created listener thread is bound to a different network interface card queue; and the apparatus comprises:
a receiving unit, configured to receive a service request sent by the multi-queue network interface card of the server, wherein the service request is acquired from a network interface card queue bound to the listener thread and is from the client; and
a first sending unit, configured to send the service request to an idle worker thread, wherein the service request is used for instructing the worker thread to perform service processing on the service request and send an obtained service processing result to the multi-queue network interface card, wherein the worker thread and the listener thread belong to a same process.

7. The apparatus according to claim 6, further comprising:
a second sending unit, configured to send a service request acquiring message to the multi-queue network interface card before the receiving unit receives the service request sent by the multi-queue network interface card of the server, wherein the service request is acquired from the network interface card queue bound to the listener thread and is from the client, the service request acquiring message carries a queue identifier of the network interface card queue bound to the listener thread, and the queue identifier is used by the multi-queue network interface card to determine that the listener thread is bound to the network interface card queue corresponding to the queue identifier.

8. The apparatus according to claim 6, wherein the server has a multi-core processor; each created listener thread is bound to a different target core in the multi-core processor, and each network interface card queue in the multi-queue network interface card is bound to a different core in the target cores, so as to implement that each created listener thread is bound to a different network interface card queue, wherein the target cores are all cores in the multi-core processor that are used to bind the listener threads and the network interface card queues, and the quantity of network interface card queues is equal to a quantity of target cores; and
the receiving unit is specifically configured to receive the service request sent by the multi-queue network interface card of the server, wherein the service request is acquired from the network interface card queue bound to the target core running the listener thread and is from the client.

9. The apparatus according to claim 8, wherein the worker thread created in each process is bound to a core, wherein worker threads created in different processes are bound to different cores.

10. The apparatus according to any one of claims 6 to 9, further comprising:
a thread creation unit, configured to: create a new worker thread in the process to which the listener thread belongs when a quantity of idle worker threads in worker threads created in the process is less than a first preset quantity threshold; and/or
delete an idle worker thread from the process to which the listener thread belongs when a quantity of idle worker threads in worker threads created in the process is greater than a second preset quantity threshold, wherein after the deleting, the quantity of idle worker threads in the worker threads created in the process is not greater than the second preset quantity threshold.

## Patentansprüche

1. Dienstanfrageverarbeitungsverfahren, das auf einen auf einem Server erzeugten "Listener-Thread" angewendet wird, wobei der Server eine Mehrfachwarteschlangen-Netzwerkschnittstellenkarte aufweist; eine Netzwerkschnittstellenkartenwarteschlange der Mehrfachwarteschlangen-Netzwerkschnittstellenkarte eine Dienstanfrage von einem Client speichert; Prozesse, deren Menge einer Menge von Netzwerkschnittstellenkartenwarteschlangen der Mehrfachwarteschlangen-Netzwerkschnittstellenkarte entsprechen, auf dem Server erzeugt werden; ein "Listener-Thread" und mehrere "Worker-Threads" in jedem Prozess erzeugt werden; jeder erzeugte "Listener-Thread" an eine unterschiedliche Netzwerkschnittstellenkartenwarteschlange gebunden ist; und das Verfahren Folgendes umfasst:
Empfangen, durch den "Listener-Thread", einer durch die Mehrfachwarteschlangen-Netzwerkschnittstellenkarte des Servers gesendeten Dienstanfrage, wobei die Dienstanfrage aus einer an den "Listener-Thread" gebundenen Netzwerkschnittstellenkartenwarteschlange gewonnen wird und von dem Client stammt; und
Senden der Dienstanfrage an einen ungenutzten "Worker-Thread", wobei die Dienstanfrage verwendet wird, um den "Worker-Thread" anzuweisen, eine Dienstverarbeitung an der Dienstanfrage durchzuführen und ein erhaltenes Dienstverarbeitungsergebnis an die Mehrfachwarteschlangen-Netzwerkschnittstellenkarte zu senden, wobei der "Worker-Thread" und der "Listener-Thread" zu einem gleichen Prozess gehören.

2. Verfahren nach Anspruch 1, vor dem Empfangen einer durch die Mehrfachwarteschlangen-Netzwerkschnittstellenkarte des Servers gesendeten Dienstanfrage, wobei die Dienstanfrage aus einer an den "Listener-Thread" gebundenen Netzwerkschnittstellenkartenwarteschlange gewonnen wird und von dem Client stammt, ferner umfassend:
Senden einer Dienstanfragengewinnungsnachricht an die Mehrfachwarteschlangen-Netzwerkschnittstellenkarte, wobei die Dienstanfragengewinnungsnachricht eine Warteschlangenkennung der an den "Listener-Thread" gebundenen Netzwerkschnittstellenkartenwarteschlange enthält, und die Warteschlangenkennung durch die Mehrfachwarteschlangen-Netzwerkschnittstellenkarte verwendet wird, um zu bestimmen, dass der "Listener-Thread" an die Netzwerkschnittstellenkartenwarteschlange, die der Warteschlangenkennung entspricht, gebunden ist.

3. Verfahren nach Anspruch 1, wobei der Server einen Mehrkemprozessor aufweist;
jeder erzeugte "Listener-Thread" an einen unterschiedlichen Zielkern in dem Mehrkemprozessor gebunden ist, und jede Netzwerkschnittstellenkartenwarteschlange in der Mehrfachwarteschlangen-Netzwerkschnittstellenkarte an einen unterschiedlichen Kern in den Zielkernen gebunden ist, um zu implementieren, dass jeder erzeugte "Listener-Thread" an eine unterschiedliche Netzwerkschnittstellenkartenwarteschlange gebunden ist, wobei die Zielkerne alle Kerne in dem Mehrkemprozessor sind, die verwendet werden, um die "Listener-Threads" und die Netzwerkschnittstellenkartenwarteschlangen zu binden, und die Menge an Netzwerkschnittstellenkartenwarteschlangen gleich einer Menge an Zielkernen ist; und
wobei das Empfangen, durch den "Listener-Thread", einer durch die Mehrfachwarteschlangen-Netzwerkschnittstellenkarte des Servers gesendeten Dienstanfrage, wobei die Dienstanfrage aus einer an den "Listener-Thread" gebundenen Netzwerkschnittstellenkartenwarteschlange gewonnen wird und von dem Client stammt, umfasst:
Empfangen, durch den "Listener-Thread", der durch die Mehrfachwarteschlangen-Netzwerkschnittstellenkarte des Servers gesendeten Dienstanfrage, wobei die Dienstanfrage aus der an den den "Listener-Thread" ausführenden Zielkern gebundenen Netzwerkschnittstellenkartenwarteschlange gewonnen wird und von dem Client stammt.

4. Verfahren nach Anspruch 3, wobei der in jedem Prozess erzeugte "Worker-Thread" an einen Kern gebunden ist, wobei die in unterschiedlichen Prozessen erzeugten "Worker-Threads" an unterschiedliche Kerne gebunden sind.

5. Verfahren nach einem der Ansprüche 1 bis 4, ferner umfassend:
Erzeugen eines neuen "Worker-Threads" in dem Prozess, zu dem der "Listener-Thread" gehört, wenn eine Menge von ungenutzten "Worker-Threads" bei in dem Prozess erzeugten "Worker-Threads" geringer ist als ein erster voreingestellter Mengenschwellenwert; und/oder
Löschen eines ungenutzten "Worker-Threads" aus dem Prozess, zu dem der "Listener-Thread" gehört, wenn eine Menge von ungenutzten "Worker-Threads" bei in dem Prozess erzeugten "Worker-Threads" größer ist als ein zweiter voreingestellter Mengenschwellenwert, wobei nach dem Löschen die Menge der ungenutzten "Worker-Threads" bei den in dem Prozess erzeugten "Worker-Threads" nicht größer ist als der zweite voreingestellte Mengenschwellenwert.

6. Dienstanfrageverarbeitungseinrichtung, die auf einen auf einem Server erstellten "Listener-Thread" angewendet ist, wobei der Server eine Mehrfachwarteschlangen-Netzwerkschnittstellenkarte aufweist; eine Netzwerkschnittstellenkartenwarteschlange der Mehrfachwarteschlangen-Netzwerkschnittstellenkarte eine Dienstanfrage von einem Client speichert; Prozesse, deren Menge einer Menge von Netzwerkschnittstellenkartenwarteschlangen der Mehrfachwarteschlangen-Netzwerkschnittstellenkarte entsprechen, auf dem Server erzeugt werden; ein "Listener-Thread" und mehrere "Worker-Threads" in jedem Prozess erzeugt werden; jeder erzeugte "Listener-Thread" an eine unterschiedliche Netzwerkschnittstellenkartenwarteschlange gebunden ist; und die Einrichtung umfasst:
eine Empfangseinheit, die ausgelegt ist, eine durch die Mehrfachwarteschlangen-Netzwerkschnittstellenkarte des Servers gesendete Dienstanfrage zu empfangen, wobei die Dienstanfrage aus einer an den "Listener-Thread" gebundenen Netzwerkschnittstellenkartenwarteschlange gewonnen ist und von dem Client stammt; und
eine erste Sendeeinheit, die ausgelegt ist, die Dienstanfrage an einen ungenutzten "Worker-Thread" zu senden, wobei die Dienstanfrage verwendet wird, um den "Worker-Thread" anzuweisen, eine Dienstverarbeitung an der Dienstanfrage durchzuführen und ein erhaltenes Dienstverarbeitungsergebnis an die Mehrfachwarteschlangen-Netzwerkschnittstellenkarte zu senden, wobei der "Worker-Thread" und der "Listener-Thread" zu einem gleichen Prozess gehören.

7. Einrichtung nach Anspruch 6, ferner umfassend:
eine zweite Sendeeinheit, die ausgelegt ist, eine Dienstanfragengewinnungsnachricht an die Mehrfachwarteschlangen-Netzwerkschnittstellenkarte zu senden, bevor die Empfangseinheit die durch die Mehrfachwarteschlangen-Netzwerkschnittstellenkarte des Servers gesendete Dienstanfrage empfängt, wobei die Dienstanfrage aus der an den "Listener-Thread" gebundenen Netzwerkschnittstellenkartenwarteschlange gewonnen ist und von dem Client stammt, die Dienstanfragengewinnungsnachricht eine Warteschlangenkennung der an den "Listener-Thread" gebundenen Netzwerkschnittstellenkartenwarteschlange enthält und die Warteschlangenkennung durch die Mehrfachwarteschlangen-Netzwerkschnittstellenkarte verwendet wird, um zu bestimmen, dass der "Listener-Thread" an die Netzwerkschnittstellenkartenwarteschlange, die der Warteschlangenkennung entspricht, gebunden ist.

8. Einrichtung nach Anspruch 6, wobei der Server einen Mehrkemprozessor aufweist;
jeder erzeugte "Listener-Thread" an einen unterschiedlichen Zielkern in dem Mehrkernprozessor gebunden ist, und jede Netzwerkschnittstellenkartenwarteschlange in der Mehrfachwarteschlangen-Netzwerkschnittstellenkarte an einen unterschiedlichen Kern in den Zielkernen gebunden ist, um zu implementieren, dass jeder erzeugte "Listener-Thread" an eine unterschiedliche Netzwerkschnittstellenkartenwarteschlange gebunden ist, wobei die Zielkerne alle Kerne in dem Mehrkemprozessor sind, die verwendet werden, um die "Listener-Threads" und die Netzwerkschnittstellenkartenwarteschlangen zu binden, und die Menge an Netzwerkschnittstellenkartenwarteschlangen gleich einer Menge an Zielkernen ist; und
die Empfangseinheit insbesondere ausgelegt ist, die durch die Mehrfachwarteschlangen-Netzwerkschnittstellenkarte des Servers gesendete Dienstanfrage zu empfangen, wobei die Dienstanfrage aus der an den den "Listener-Thread" ausführenden Zielkern gebundenen Netzwerkschnittstellenkartenwarteschlange gewonnen ist und von dem Client stammt.

9. Einrichtung nach Anspruch 8, wobei der in jedem Prozess erzeugte "Worker-Thread" an einen Kern gebunden ist, wobei die in unterschiedlichen Prozessen erzeugten "Worker-Threads" an unterschiedliche Kerne gebunden sind.

10. Einrichtung nach einem der Ansprüche 6 bis 9, ferner umfassend:
eine Threaderzeugungseinheit, die zu Folgendem ausgelegt ist: Erzeugen eines neuen "Worker-Threads" in dem Prozess, zu dem der "Listener-Thread" gehört, wenn eine Menge von ungenutzten "Worker-Threads" bei in dem Prozess erzeugten "Worker-Threads" geringer ist als ein erster voreingestellter Mengenschwellenwert; und/oder Löschen eines ungenutzten "Worker-Threads" aus dem Prozess, zu dem der "Listener-Thread" gehört, wenn eine Menge von ungenutzten "Worker-Threads" bei in dem Prozess erzeugten "Worker-Threads" größer ist als ein zweiter voreingestellter Mengenschwellenwert, wobei nach dem Löschen die Menge der ungenutzten "Worker-Threads" bei den in dem Prozess erzeugten "Worker-Threads" nicht größer ist als der zweite voreingestellte Mengenschwellenwert.

## Revendications

1. Procédé de traitement de demande de service, appliqué à un filon d'écoute créé sur un serveur, dans lequel le serveur a une carte d'interface réseau à files d'attente multiples ; une file d'attente de carte d'interface réseau de la carte d'interface réseau à files d'attente multiples stocke une demande de service provenant d'un client ; des processus dont le nombre est égal à un nombre de files d'attente de cartes d'interface réseau de la carte d'interface réseau à files d'attente multiples sont créés sur le serveur ; un filon d'écoute et plusieurs filons de travail sont créés dans chaque processus ; chaque filon d'écoute créé est lié à une autre file d'attente de carte d'interface réseau ; et le procédé comprend :
la réception, par le filon d'écoute, d'une demande de service envoyée par la carte d'interface réseau à files d'attente multiples du serveur, la demande de service étant acquise à partir d'une file d'attente de carte d'interface réseau liée au filon d'écoute et provenant du client ; et
l'envoi de la demande de service à un filon de travail inactif, la demande de service étant utilisée pour demander au filon de travail d'effectuer un traitement de service sur la demande de service et d'envoyer un résultat du traitement de service obtenu à la carte d'interface réseau à files d'attente multiples, le filon de travail et le filon d'écoute appartenant à un même processus.

2. Procédé selon la revendication 1, avant la réception d'une demande de service envoyée par la carte d'interface réseau à files d'attente multiples du serveur, la demande de service étant acquise à partir d'une file d'attente de carte d'interface réseau liée au filon d'écoute et provenant du client, comprenant en outre :
l'envoi d'un message d'acquisition de demande de service à la carte d'interface réseau à files d'attente multiples, le message d'acquisition de demande de service portant un identifiant de file d'attente de la file d'attente de la carte d'interface réseau liée au filon du programme d'écoute, et l'identifiant de file d'attente étant utilisé par la carte d'interface réseau à files d'attente multiples pour déterminer que le filon d'écoute est lié à la file d'attente de la carte d'interface réseau correspondant à l'identifiant de la file d'attente.

3. Procédé selon la revendication 1, dans lequel le serveur possède un processeur multicoeur ; chaque filon d'écoute créé est lié à un coeur cible différent dans le processeur multicoeur et chaque file d'attente d'interface réseau de la carte d'interface réseau à files d'attente multiples est liée à un coeur différent parmi les coeurs cibles, afin de réaliser la situation où chaque filon d'écoute créé est lié à une autre file d'attente de carte d'interface réseau, les coeurs cibles étant tous des coeurs du processeur multicoeur utilisés pour lier les filons d'écoute et les files d'attente des cartes d'interface réseau, et le nombre de files d'attente des cartes d'interface réseau étant égal au nombre de coeurs cibles ; et
la réception, par le filon d'écoute, d'une demande de service envoyée par la carte d'interface réseau à files d'attente multiples du serveur, la demande de service étant acquise à partir d'une file d'attente de carte d'interface réseau liée au filon d'écoute et provenant du client, comprend :
la réception, par le filon d'écoute, de la demande de service envoyée par la carte d'interface réseau à files d'attente multiples du serveur, la demande de service étant acquise à partir de la file d'attente de la carte d'interface réseau liée au coeur cible exécutant le filon d'écoute et provenant du client.

4. Procédé selon la revendication 3, dans lequel le filon de travail créé dans chaque processus est lié à un coeur, les filons de travail créés dans différents processus étant liés à des coeurs différents.

5. Procédé selon l'une quelconque des revendications 1 à 4, comprenant en outre :
la création d'un nouveau filon de travail dans le processus auquel le filon d'écoute appartient lorsqu'un nombre de filons de travail inactifs dans des filons de travail créés dans le processus est inférieur à un premier seuil quantitatif prédéfini ; et/ou la suppression d'un filon de travail inactif du processus auquel le filon d'écoute appartient lorsque le nombre de filons de travail inactifs parmi les filons de travail créés dans le processus est supérieur à un second seuil quantitatif prédéfini, après la suppression, le nombre de filons de travail inactifs parmi les filons de travail créés dans le processus n'étant pas supérieur au second seuil quantitatif prédéfini.

6. Appareil de traitement de demandes de service, appliqué à un filon d'écoute créé sur un serveur, le serveur ayant une carte d'interface réseau à files d'attente multiples ; une file d'attente de carte d'interface réseau de la carte d'interface réseau à files d'attente multiples stockant une demande de service provenant d'un client ; des processus dont le nombre est égal à un nombre de files d'attente de cartes d'interface réseau de la carte d'interface réseau à files d'attente multiples étant créés sur le serveur ; un filon d'écoute et plusieurs filons de travail étant créés dans chaque processus ; chaque filon d'écoute créé étant lié à une autre file d'attente de carte d'interface réseau ; et l'appareil comprenant :
une unité de réception, configurée pour recevoir une demande de service envoyée par la carte d'interface réseau à files d'attente multiples du serveur, la demande de service étant acquise à partir d'une file d'attente de carte d'interface réseau liée au filon d'écoute et provient du client ; et
une première unité d'envoi, configurée pour envoyer la demande de service à un filon de travail inactif, la demande de service étant utilisée pour demander au filon de travail d'effectuer un traitement de service sur la demande de service et d'envoyer un résultat du traitement de service obtenu à la carte d'interface réseau à files d'attente multiples, le filon de travail et le filon d'écoute appartenant à un même processus.

7. Appareil selon la revendication 6, comprenant en outre :
une seconde unité d'envoi, configurée pour envoyer un message d'acquisition de demande de service à la carte d'interface réseau à files d'attente multiples avant que l'unité réceptrice ne reçoive la demande de service envoyée par la carte d'interface réseau à files d'attente multiples du serveur, la demande de service étant acquise à partir de la file d'attente de carte d'interface réseau liée au filon d'écoute et provenant du client, le message d'acquisition de demande de service portant un identifiant de file d'attente de la file d'attente d'interface réseau liée au filon d'écoute, et l'identifiant de file d'attente étant utilisé par la carte d'interface réseau à files d'attente multiples pour déterminer que le filon d'écoute est lié à la file d'attente de la carte d'interface réseau correspondant à l'identifiant de la file d'attente.

8. Appareil selon la revendication 6, dans lequel le serveur possède un processeur multicoeur ; chaque filon d'écoute créé est lié à un coeur cible différent dans le processeur multicoeur et chaque file d'attente d'interface réseau de la carte d'interface réseau à files d'attente multiples est liée à un coeur différent parmi les coeurs cibles, afin de réaliser la situation où chaque filon d'écoute créé est lié à une autre file d'attente de carte d'interface réseau, les coeurs cibles étant tous des coeurs du processeur multicoeur utilisés pour lier les filons d'écoute et les files d'attente des cartes d'interface réseau, et le nombre de files d'attente des cartes d'interface réseau étant égal au nombre de coeurs cibles ; et
l'unité de réception est spécifiquement configurée pour recevoir la demande de service envoyée par la carte d'interface réseau à files d'attente multiples du serveur, la demande de service étant acquise à partir de la file d'attente de la carte d'interface réseau liée au coeur cible exécutant le filon d'écoute et provenant du client.

9. Appareil selon la revendication 8, dans lequel le filon de travail créé dans chaque processus est lié à un coeur, les filons de travail créés dans différents processus étant liés à des coeurs différents.

10. Appareil selon l'une quelconque des revendications 6 à 9, comprenant en outre :
une unité de création de filon, configurée pour : créer un nouveau filon de travail dans le processus auquel le filon d'écoute appartient lorsqu'un nombre de filons de travail inactifs dans des filons de travail créés dans le processus est inférieur à un premier seuil quantitatif prédéfini ; et/ou
supprimer un filon de travail inactif du processus auquel le filon d'écoute appartient lorsque le nombre de filons de travail inactifs parmi les filons de travail créés dans le processus est supérieur à un second seuil quantitatif prédéfini, après la suppression, le nombre de filons de travail inactifs parmi les filons de travail créés dans le processus n'étant pas supérieur au second seuil quantitatif prédéfini.
